# EUROPEAN PATENT APPLICATION

(11) **EP 3 511 746 A1**
(43) Date of publication of application: **17.07.2019**
(21) Application number: 17848500.9
(22) Date of filing: 07.08.2017
(51) Int. Cl.: G02B 1/14, B32B 7/02, B32B 27/30, B32B 27/38

(54) **HARDCOAT LAMINATE, MOLDED BODY AND METHOD FOR PRODUCING SAME**

(30) Priority: 08.09.2016 JP 2016175413
(71) Applicant: Daicel Corporation, Osaka-shi, Osaka 530-0011 (JP)
(72) Inventor: ONOMICHI Hiroshi, Amagasaki-shi Hyogo 661-0964 (JP); HAYASHI Masaki, Amagasaki-shi Hyogo 661-0964 (JP)
(74) Representative: Grünecker Patent- und Rechtsanwälte PartG mbB
(86) International application number: PCT/JP2017/028547
(87) International publication number: WO 2018/047556

(57) **Abstract**

A curable composition for forming at least one layer of two adjacent hardcoat layers included in a hardcoat laminate contains at least one adhesion-imparting component selected from a mono(meth)acrylate having an oxygen-containing heterocyclic group, a mono(meth)acrylate having an aliphatic hydrocarbon group, a mono(meth)acrylate having a crosslinked cyclic hydrocarbon group, a mono(meth)acrylate having an allyloxy group, a polymer of a mono(meth)acrylate having an allyloxy group, a multibranched polyvinyl compound having a weight-average molecular weight of not less than 1000, a di (meth) acrylate having a crosslinked cyclic hydrocarbon group, an alkanediol di(meth)acrylate, and a polyalkylene glycol di(meth)acrylate. A hardcoat laminate obtained therefrom has prevented or reduced occurrence of separation, breakage, and/or cracks in punching.

## Description

### TECHNICAL FIELD

The present invention relates to a high-hardness hardcoat laminate containing a substrate layer and a plurality of hardcoat layers laminated on one surface of the substrate layer, as well as a shaped product including the laminate and a process for producing the shaped product.

### BACKGROUND ART

Shaped products formed of thermoplastic resins such as polyesters have excellent formability or mechanical properties and thus are used in various applications. In particular, a shaped product formed of a highly transparent thermoplastic resin is also used as a film for protecting a surface of a display. Unfortunately, the shaped product formed of a thermoplastic resin has a low surface hardness and is easily scratched, compared with a shaped product formed of an inorganic material such as glass. Thus, according to the applications, the shaped product has a high-hardness hardcoat layer formed by applying a curable resin such as a photocurable resin to a surface of the shaped product and curing the resin.

Japanese Patent Application Laid-Open Publication No. 2000-347001 (JP 2000-347001 A, Patent Document 1) discloses a hardcoat agent for coating a surface of plastic material. The hardcoat agent contains an energy-ray-polymerizable material and 1 to 500 parts by weight of an organic-solvent-dispersible colloidal silica relative to 100 parts by weight of the energy-ray-polymerizable material in terms of SiO₂, and the colloidal silica has an average particle size of 5 to 200 nm. This document discloses that an epoxy compound is suitable as the energy-ray-polymerizable material.

However, a hardcoat layer formed of this hardcoat agent is a monolayer and has thus insufficient mechanical properties to withstand long-term use in recent applications that require a high hardcoat property.

Japanese Patent No. 3073270 (JP 3073270 B, Patent Document 2) discloses a substrate provided with a hardcoat film, consisting of a substrate and a hardcoat film containing a first coating formed on a surface of the substrate and a second coating formed on the first coating, wherein the first coating and/or the second coating is formed of a resin containing fine particles, and the hardness of a resin phase forming the first coating is smaller than the hardness of a resin phase forming the second coating. This document discloses that suitably used as the resin for forming the first coating is a polyester, a vinyl chloride-vinyl acetate copolymer resin, a butyral resin, a hard urethane resin, or others and that suitably used as the resin for forming the second coating is an acrylic resin, a silicone resin, a melamine resin, an epoxy resin, a phosphazene resin, or others.

Japanese Patent No. 5532571 (JP 5532571 B, Patent Document 3) discloses a hardcoat film including, in sequence, a triacetylcellulose film, a first hardcoat layer disposed on one surface of the triacetylcellulose film, and a second hardcoat layer disposed on the first hardcoat layer. The first and second hardcoat layers consist of a cured product of a curable resin composition containing a reactive inorganic fine particle with an average particle size of 10 to 100 nm and a binder component, and the proportion of the inorganic fine particle to be contained in the first hardcoat layer is higher than that in the second hardcoat layer. This document describes acrylate-series, oxetane-series, and silicone-series ionizing-radiation-curable resins as the binder component. In Examples of this document, pentaerythritol triacrylate, dipentaerythritol hexaacrylate, and urethane acrylate are used.

These hardcoat laminates have high hardness and are thus excellent in characteristics such as abrasion resistance and durability of mechanical properties. However, due to low flexibility, in a case where these hardcoat laminates are subjected to punching, separation, breakage, and/or cracks occur. The punching is thus inapplicable to these hardcoat laminates. In particular, it is difficult to punch these laminates with a die having a small curvature. Moreover, it is difficult to improve the adhesion between the hardcoat layers, and these hardcoat laminates have an insufficient adhesion between the hardcoat layers. Further, due to low flexibility and adhesion, bending of these hardcoat laminates causes breakage and/or separation.

### CITATION LIST

### PATENT LITERATURE

Patent Document 1: JP 2000-347001 A (Claims and paragraph [0027])
Patent Document 2: JP 3073270 B (claim 1 and paragraph [0018])
Patent Document 3: JP 5532571 B (claim 1, paragraph [0090], and Examples)

### SUMMARY OF INVENTION

### TECHNICAL PROBLEM

It is therefore an object of the present invention to provide a hardcoat laminate having prevented or reduced occurrence of separation, breakage, and/or cracks in punching, as well as a shaped product and a process for producing the shaped product.

Another object of the present invention is to provide a hardcoat laminate with a high adhesion between hardcoat layers, as well as a shaped product and a process for the shaped product.

It is still another object of the present invention to provide a hardcoat laminate having prevented or reduced breakage and/or separation in bending, as well as a shaped product and a process for the shaped product.

It is a further object of the present invention to provide a highly transparent hardcoat laminate, as well as a shaped product and a process for producing the shaped product.

### SOLUTION TO PROBLEM

The inventors of the present invention made intensive studies to achieve the above objects and finally found that, by containing a specific adhesion-imparting component in a curable composition for forming at least one layer of two adjacent hardcoat layers included in a hardcoat laminate, the hardcoat laminate has prevented or reduced occurrence of separation, breakage, and/or cracks in punching. The present invention was accomplished based on the above findings.

That is, the present invention includes a hardcoat laminate including, in sequence, a substrate layer, a first hardcoat layer, and a second hardcoat layer, and the first hardcoat layer is in contact with the second hardcoat layer, at least one layer of the first hardcoat layer and the second hardcoat layer includes a cured product of a curable composition containing a curable binder and an adhesion-imparting component, and the adhesion-imparting component includes at least one member selected from a mono(meth)acrylate having an oxygen-containing heterocyclic group, a mono (meth) acrylate having an aliphatic hydrocarbon group, a mono(meth)acrylate having a crosslinked cyclic hydrocarbon group, a mono(meth)acrylate having an allyloxy group, a polymer of a mono (meth) acrylate having an allyloxy group, a multibranched polyvinyl compound having a weight-average molecular weight of not less than 1000, a di(meth)acrylate having a crosslinked cyclic hydrocarbon group, an alkanediol di(meth)acrylate, and a polyalkylene glycol di(meth)acrylate. The curable binder may contain a polyfunctional (meth)acrylate and/or an epoxy compound (particularly a di- to octa-functional (meth)acrylate and a polyfunctional alicyclic epoxy compound) . In the laminate of the present invention, the first hardcoat layer may include a cured product of a first curable composition containing a polyfunctional
(meth) acrylate and an epoxy compound, the second hardcoat layer may include a cured product of a second curable composition containing a polyfunctional (meth)acrylate, and at least one of the first curable composition and the second curable composition may contain an adhesion-imparting component. At least one layer of the first hardcoat layer and the second hardcoat layer may contain an inorganic particle (particularly a silica nanoparticle having a reactive group to a (meth)acryloyl group and/or an epoxy group). The adhesion-imparting component may include at least one member selected from tetrahydrofurfuryl (meth)acrylate, a C₆₋₁₂alkyl mono(meth)acrylate, isobornyl (meth)acrylate, a C₁₋₃alkyl allyloxyC₁₋₃alkylacrylate, and a multibranched polyvinyl compound having a weight-average molecular weight of 10000 to 100000. The ratio of the adhesion-imparting component is about 0.01 to 5 parts by weight relative to 100 parts by weight of the curable binder. The first hardcoat layer and the second hardcoat layer may have a total thickness of not more than 60 µm. The laminate of the present invention may have a total light transmittance of not less than 70% and a haze of not more than 10%.

The present invention also includes a shaped product including the laminate. Moreover, the present invention also includes a process for producing a shaped product, the process including punching the laminate.

### ADVANTAGEOUS EFFECTS OF INVENTION

According to the present invention, the curable composition for forming at least one layer of two adjacent hardcoat layers included in the hardcoat laminate contains a specific adhesion-imparting component, and the hardcoat laminate has prevented or reduced occurrence of separation, breakage, and/or cracks in punching. Moreover, the hardcoat laminate has an improved adhesion between the hardcoat layers and prevented or reduced breakage and/or separation in bending. Furthermore, the hardcoat laminate has an improved transparency.

### BRIEF DESCRIPTION OF DRAWINGS

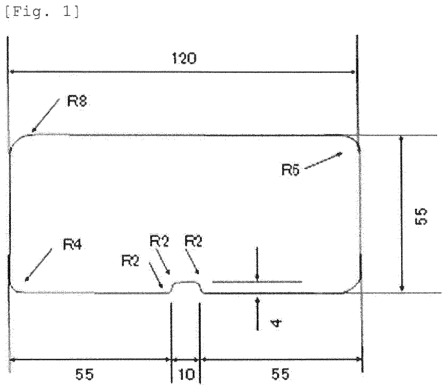

[Fig. 1] Fig. 1 is a schematic view showing a shape to be punched with a Thompson blade in a method of evaluating punchability of Example 1.

### DESCRIPTION OF EMBODIMENTS

### [Substrate layer]

A substrate layer can be selected according to applications and is not particularly limited to a specific one. The after-mentioned hardcoat layers have an excellent transparency, and thus the substrate layer is also preferably formed of a transparent material when used in the optical or other fields. The transparent material may be an inorganic material. In view of characteristics including strength and/or formability, an organic material is widely used. The organic material may include, for example, a cellulose derivative, a polyester, a polyamide, a polyimide, a polycarbonate, and a (meth)acrylic polymer. Widely used among them is, for example, a cellulose ester and/or a polyester.

Examples of the cellulose ester may include a cellulose acetate such as a cellulose triacetate (TAC), and a cellulose acetate C₃₋₄acylate such as a cellulose acetate propionate or a cellulose acetate butyrate. Examples of the polyester may include a poly(alkylene arylate) such as a poly(ethylene terephthalate) (PET) or a poly(ethylene naphthalate) (PEN).

In view of an excellent balance of characteristics including mechanical properties and transparency, preferred among them is a poly (C₂₋₄alkylene arylate) such as a PET or a PEN.

The substrate layer may be a uniaxially or biaxially stretched film. In view of low birefringence and excellent optical isotropy, the substrate layer may be a unstretched film.

The substrate layer may be subjected to a surface treatment (for example, a corona discharge treatment, a flame treatment, a plasma treatment, and an ozone or ultraviolet ray irradiation treatment) or may have an easily adhesive layer.

### [Hardcoat layer]

A hardcoat laminate of the present invention includes, in addition to the substrate layer, a first hardcoat layer and a second hardcoat layer which are in contact with each other. The hardcoat laminate of the present invention includes, in sequence, the substrate layer, the first hardcoat layer, and the second hardcoat layer, and at least one layer of the first and second hardcoat layers is formed of a cured product of a curable composition containing a curable binder and a specific adhesion-imparting component. Both first and second hardcoat layers may be formed of the cured product of the curable composition. Further, the hardcoat laminate of the present invention may contain, in addition to the first and second hardcoat layers, another hardcoat layer, for example, a third hardcoat layer between the substrate layer and the first hardcoat layer (a third hardcoat layer that is in contact with the first hardcoat layer) and/or a fourth hardcoat layer that is in contact with the second hardcoat layer. Moreover, among these first to fourth hardcoat layers, a hardcoat layer free from the adhesion-imparting component is formed of a cured product of a curable composition containing a curable binder. In terms of a smaller total thickness of the laminate and an excellent productivity, it is preferred that the hardcoat layer have a two-layer structure composed of the first hardcoat layer and the second hardcoat layer.

### (Adhesion-imparting component)

The adhesion-imparting component is selected from a mono(meth)acrylate having an oxygen-containing heterocyclic group, a mono(meth)acrylate having an aliphatic hydrocarbon group, a mono(meth)acrylate having a crosslinked cyclic hydrocarbon group, a mono(meth)acrylate having an allyloxy group, a polymer of a mono(meth)acrylate having an allyloxy group, a multibranched polyvinyl compound having a weight-average molecular weight of not less than 1000, a di(meth)acrylate having a crosslinked cyclic hydrocarbon group, an alkanediol di(meth)acrylate, and a polyalkylene glycol di(meth)acrylate. These adhesion-imparting components may be used alone or in combination.

The mono(meth)acrylate having an oxygen-containing heterocyclic group may include, for example, a (meth)acrylate having an oxygen-containing heterocycle such as oxacyclobutane, tetrahydrofuran (oxacyclopentane), tetrahydropyran (oxane or oxacyclohexane), oxacycloheptane, or oxacyclooctane. These (meth) acrylates may be used alone or in combination . Preferred among them is tetrahydrofurfuryl (meth)acrylate.

The mono(meth)acrylate having an aliphatic hydrocarbon group may include, for example, a C₁₋₂₀alkyl (meth)acrylate such as methyl (meth)acrylate, ethyl (meth)acrylate, propyl (meth)acrylate, isopropyl (meth)acrylate, n-butyl (meth)acrylate, isobutyl (meth)acrylate, t-butyl (meth)acrylate, hexyl (meth)acrylate, octyl (meth)acrylate, 2-ethylhexyl (meth)acrylate, nonyl (meth)acrylate, decyl (meth)acrylate, dodecyl (meth)acrylate, or tetradecyl (meth)acrylate. These (meth)acrylates may be used alone or in combination. Preferred among them is a C₆₋₁₂alkyl mono(meth)acrylate such as octyl (meth)acrylate or decyl (meth)acrylate.

The mono(meth)acrylate having a crosslinked cyclic hydrocarbon group may include, for example, a (meth)acrylate having a crosslinked cyclic hydrocarbon group such as bicyclopentyl, bicyclohexyl, bicycloheptyl, bicyclooctyl, bicyclononyl, bicyclodecyl, tricyclodecyl, tricyclododecyl, tricycloundecyl, isobornyl, dicyclopentanyl, dicyclopentenyl, or adamantyl. These (meth)acrylates may be used alone or in combination. Widely used among them is, for example, (meth)acrylates such as isobornyl (meth)acrylate and/or adamantyl (meth)acrylate, and preferred is isobornyl (meth)acrylate.

The mono(meth)acrylate having an allyloxy group may include, for example, an alkyl ester of an allyloxyalkylacrylic acid such as 2-(allyloxymethyl)acrylic acid methyl ester. These (meth)acrylates may be used alone or in combination. Preferred among these (meth) acrylates is a C₁₋₃alkyl ester of an allyloxyC₁₋₃alkylacrylic acid. The mono(meth)acrylate having an allyloxy group is cyclized by a curing reaction to produce the above-mentioned oxygen-containing heterocycle. For 2-(allyloxymethyl)acrylic acid methyl ester, a tetrahydrofuran ring is produced.

The polymer of the mono(meth)acrylate having an allyloxy group may include, for example, a polymer containing at least the above-mentioned mono (meth) acrylate having an allyloxy group (for example, a homo- or co-polymer) . The degree of polymerization can be selected from a range of about 2 to 100000 and is, for example, about 1000 to 80000, preferably about 5000 to 70000, and more preferably about 10000 to 50000. These (meth)acrylates may be used alone or in combination. Preferred among them is a polymer of a C₁₋₃alkyl ester of an allyloxyC₁₋₃alkylacrylic acid.

For the multibranched polyvinyl compound having a weight-average molecular weight of not less than 1000, a branched basic skeleton (such as a hydrocarbon skeleton, a polyether skeleton, or a polyester skeleton) has a plurality of vinyl groups. For example, the multibranched polyvinyl compound may be a solvent-soluble polyfunctional vinyl copolymer that is branched using a difunctional vinyl compound such as divinylbenzene. The weight-average molecular weight is not less than 1000 in terms of a polystyrene using GPC (gel permeation chromatography) and is, for example, about 10000 to 100000, preferably about 15000 to 50000, and more preferably about 20000 to 40000 (particularly about 25000 to 35000) . The number of vinyl groups per molecule of the multibranched polyvinyl compound is not less than 2 and is, for example, about 2 to 100. The multibranched polyvinyl compound having a weight-average molecular weight of not less than 1000 may be a compound as described in Japanese Patent Application Laid-Open Publication Nos. 2015-193696 and 2013-100433. These multibranched polyvinyl compounds may be used alone or in combination.

The di(meth)acrylate having a crosslinked cyclic hydrocarbon group may include, for example, a di(meth)acrylate having the crosslinked cyclic hydrocarbon group as exemplified in the paragraph of the above-mentioned mono(meth)acrylate having a crosslinked cyclic hydrocarbon group. These (meth)acrylates may be used alone or in combination. Widely used among them is, for example, di(meth)acrylates such as tricyclodecanedimethanol di(meth)acrylate, dicyclopentadienedimethanol di(meth)acrylate, and/or adamantane di(meth)acrylate, and preferred is a dicyclopentadienediC₁₋₃alkanol di(meth)acrylate such as dicyclopentadienedimethanol di(meth)acrylate.

The alkanediol di(meth)acrylate may include, for example, a C₂₋₁₂alkanediol di(meth)acrylate such as ethylene glycol di(meth)acrylate, propylene glycol di(meth)acrylate, butanediol di(meth)acrylate, neopentyl glycol di(meth)acrylate, hexanediol di(meth)acrylate, heptanediol di(meth)acrylate, or octanediol di(meth)acrylate. These (meth)acrylates may be used alone or in combination. Preferred among them is a C₄₋₁₀alkanediol di(meth)acrylate such as hexanediol di(meth)acrylate.

The polyalkylene glycol di(meth)acrylate may include, for example, a polyC₂₋₆alkylene glycol di(meth)acrylate such as diethylene glycol di(meth)acrylate, dipropylene glycol di(meth)acrylate, or a polyoxytetramethylene glycol di(meth)acrylate. The repeating number of alkylene glycol units is not less than 2, and is, for example, about 2 to 10, preferably about 2 to 5, and more preferably about 2 to 3. These (meth)acrylates may be used alone or in combination. Preferred among them is a polyC₂₋₆alkylene glycol di(meth)acrylate such as dipropylene glycol di(meth)acrylate.

In view of an effect of a significantly improving adhesion between layers (between hardcoat layers, and between a hardcoat layer and another layer) and an excellent effect (punchability) of preventing or reducing occurrence of separation, breakage, and/or cracks in punching the laminate, preferred among these adhesion-imparting components is tetrahydrofurfuryl (meth)acrylate, a C₆₋₁₂alkyl mono(meth)acrylate, isobornyl (meth)acrylate, a C₁₋₃alkyl ester of an allyloxyC₁₋₃alkylacrylic acid, and/or a multibranched polyvinyl compound having a weight-average molecular weight of 10000 to 100000, and particularly preferred is a C₈₋₁₀alkyl mono(meth)acrylate such as octyl (meth)acrylate and/or decyl (meth)acrylate, and/or a C₁₋₂alkyl ester of an allyloxyC₁₋₂alkylacrylic acid.

The ratio of the adhesion-imparting component relative to 100 parts by weight of the curable binder is, for example, about 0.01 to 5 parts by weight, preferably about 0.05 to 4 parts by weight, and more preferably about 0.1 to 3 parts by weight (particularly about 0.5 to 2 parts by weight) . Too low the ratio of the adhesion-imparting component may reduce the effects of improving the adhesion and the punchability. In contrast, too high the ratio may reduce the mechanical properties of the hardcoat layer that includes the adhesion-imparting component.

### (Curable binder)

As the curable binder, a commonly used curable binder is available . The commonly used curable binder may include, for example, a polyfunctional (meth) acrylate [a (meth) acrylate having two or more (meth)acryloyl groups or a two- or more-functional (meth)acrylate] other than the adhesion-imparting component, an epoxy (meth)acrylate [such as bisphenol A type epoxy (meth)acrylate or a novolac type epoxy (meth)acrylate], a polyester (meth)acrylate [for example, an aliphatic polyester type (meth)acrylate and an aromatic polyester type (meth) acrylate], a urethane (meth) acrylate [such as a polyester type urethane (meth)acrylate or a polyether type urethane (meth)acrylate], and an epoxy compound. These curable binders may be used alone or in combination. Preferred among these curable binders is a polyfunctional (meth)acrylate and/or an epoxy compound.

### (A) Polyfunctional (meth)acrylate

Among the polyfunctional (meth)acrylates, a difunctional (meth)acrylate may include, for example, a di(meth)acrylate of a C₂₋₄alkylene oxide adduct of a bisphenol compound (such as bisphenol A or bisphenol S), including 2,2-bis(4-(meth)acryloxyethoxyphenyl)propane. A tri- or more-functional polyfunctional (meth)acrylate may include, for example, glycerin tri(meth)acrylate, trimethylolpropane tri(meth)acrylate, trimethylolethane tri(meth)acrylate, pentaerythritol tri(meth)acrylate, ditrimethylolpropane tetra(meth)acrylate, pentaerythritol tetra(meth)acrylate, dipentaerythritol penta(meth)acrylate, and dipentaerythritol hexa(meth)acrylate. These polyfunctional (meth)acrylates may be used alone or in combination.

Preferred among these polyfunctional (meth)acrylates is a tri- to octa-functional (meth) acrylate such as pentaerythritol tri(meth)acrylate, pentaerythritol tetra(meth)acrylate, dipentaerythritol penta(meth)acrylate, or dipentaerythritol hexa(meth)acrylate. Further, in view of an excellent balance of punchability and transparency, preferred is a di- to hexa-functional (meth)acrylate (particularly a tri- to hexa-functional (meth)acrylate).

### (B) Epoxy compound

The epoxy compound is any epoxy compound that is a curable epoxy compound. From the viewpoint of adhesion, an alicyclic epoxy compound is preferred, and a polyfunctional alicyclic epoxy compound (an alicyclic epoxy compound having two or more epoxy groups or a di- or more-functional alicyclic epoxy compound) is particularly preferred. Further, the polyfunctional alicyclic epoxy compound may be an alicyclic epoxy compound represented by the following formula (1).

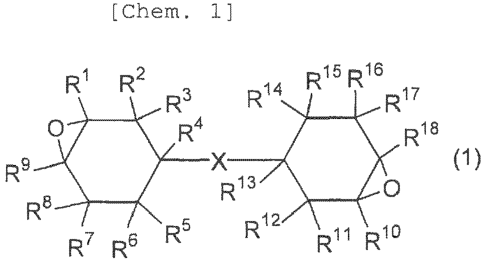

In the formula, R¹ to R¹⁸ are the same or different and each represent a hydrogen atom, a halogen atom, a hydroxy group, a hydroperoxy group, an amino group, a sulfo group, or an organic group, adjacent groups of R¹ to R¹⁸ may form an oxo group, and X represents a direct bond or a linkage group.

In R¹ to R¹⁸ of the formula (1), the halogen atom may include, for example, fluorine atom, chlorine atom, bromine atom, and iodine atom.

The organic group is any carbon-containing group. The organic group may include, for example, a hydrocarbon group, an alkoxy group, an alkenyloxy group, an aryloxy group, an aralkyloxy group, an acyl group, an acyloxy group, an alkylthio group, an alkenylthio group, an arylthio group, an aralkylthio group, a carboxyl group, an alkoxycarbonyl group, an aryloxycarbonyl group, an aralkyloxycarbonyl group, an epoxy group, an epoxy-containing group, an oxetanyl group, an oxetanyl-containing group, a cyano group, an isocyanate group, a carbamoyl group, an isothiocyanate group, and a substituted amino group.

The hydrocarbon group may include, for example, an aliphatic hydrocarbon group, an alicyclic hydrocarbon group, and an aromatic hydrocarbon group.

The aliphatic hydrocarbon group may include, for example, an alkyl group, an alkenyl group, and an alkynyl group. Examples of the alkyl group may include a C₁₋₂₀alkyl group such as methyl group, ethyl group, propyl group, isopropyl group, butyl group, hexyl group, octyl group, isooctyl group, decyl group, or dodecyl group (preferably a C₁₋₁₀alkyl group, more preferably a C₁₋₄alkyl group). The alkenyl group may include, for example, a C₂₋₂₀alkenyl group such as vinyl group, allyl group, methallyl group, 1-propenyl group, isopropenyl group, butenyl group, pentenyl group, or hexenyl group (preferably a C₂₋₁₀alkenyl group, more preferably a C₂₋₄alkenyl group). Examples of the alkynyl group may include a C₂₋₂₀alkynyl group such as ethynyl group or propynyl group (preferably a C₂₋₁₀alkynyl group, more preferably a C₂₋₄alkynyl group).

The alicyclic hydrocarbon group may include, for example, a C₃₋₁₂cycloalkyl group such as cyclopropyl group, cyclobutyl group, cyclopentyl group, cyclohexyl group, or cyclododecyl group (particularly a C₅₋₈cycloalkyl group); a C₃₋₁₂cycloalkenyl group such as cyclohexenyl group; and a C₄₋₁₅crosslinked cyclic hydrocarbon group such as bicycloheptanyl group or bicycloheptenyl group.

The aromatic hydrocarbon group may include, for example, a C₆₋₁₄aryl group such as phenyl group or naphthyl group (particularly a C₆₋₁₀aryl group).

The alkoxy group may include, for example, a C₁₋₁₀alkoxy group such as methoxy group, ethoxy group, propoxy group, isopropyloxy group, butoxy group, or isobutyloxy group (preferably a C₁₋₆alkoxy group, more preferably a C₁₋₄alkoxy group). Examples of the alkenyloxy group may include a C₂₋₁₀alkenyloxy group such as allyloxy group (preferably a C₂-₆alkenyloxy group, more preferably a C₂₋₄alkenyloxy group). The aryloxy group may include, for example, C₆₋₂₀aryloxy group such as phenoxy group, tolyloxy group, or naphthyloxy group (particularly a C₆₋₁₄aryloxy group). Examples of the aralkyloxy group may include a C₇₋₂₀aralkyloxy group such as benzyloxy group or phenethyloxy group (particularly a C₇₋₁₈aralkyloxy group).

The acyl group may include, for example, a C₁₋₂₀acyl group such as acetyl group, propionyl group, (meth)acryloyl group, or benzoyl group (particularly a C₁₋₁₂acyl group). Examples of the acyloxy group may include a C₁₋₂₀acyloxy group such as acetyloxy group, propionyloxy group, (meth)acryloyloxy group, or benzoyloxy group (particularly a C₁₋₁₂acyloxy group).

The alkylthio group may include, for example, a C₁₋₆alkylthio group such as methylthio group or ethylthio group (particularly a C₁₋₄alkylthio group). Examples of the alkenylthio group may include a C₂₋₆alkenylthio group such as allylthio group (particularly a C₂₋₄alkenylthio group). The arylthio group may include, for example, a C₆₋₂₀arylthio group such as phenylthio group, tolylthio group, or naphthylthio group (particularly a C₆₋₁₄arylthio group). Examples of the aralkylthio group may include a C₆₋₂₀aralkylthio group such as benzylthio group or phenethylthio group (particularly a C₇₋₁₈aralkylthio group).

The alkoxycarbonyl group may include, for example, a C₁₋₁₀alkoxy-carbonyl group such as methoxycarbonyl group, ethoxycarbonyl group, propoxycarbonyl group, or butoxycarbonyl group (particularly a C₁₋₆alkoxy-carbonyl group). Examples of the aryloxycarbonyl group may include a C₆₋₂₀aryloxy-carbonyl group such as phenoxycarbonyl group, tolyloxycarbonyl group, or naphthyloxycarbonyl group (particularly a C₆₋₁₄aryloxy-carbonyl group). The aralkyloxycarbonyl group may include, for example, a C₇₋₂₀aralkyloxy-carbonyl group such as benzyloxycarbonyl group (particularly a C₇₋₁₈aralkyloxy-carbonyl group).

Examples of the epoxy-containing group may include glycidyl group and glycidyloxy group. The oxetanyl-containing group may include, for example, a C₁₋₁₀alkyloxetanyloxy group such as ethyloxetanyloxy group.

Examples of the substituted amino group may include a mono- or di-alkylamino group such as methylamino group, ethylamino group, dimethylamino group, or diethylamino group (particularly a mono- or di-C₁₋₆alkylamino group) and a mono- or di-acylamino group such as acetylamino group, propionylamino group, or benzoylamino group (particularly a mono- or di-C₁₋₁₁acylamino group) .

The organic group may be a group in which two or more organic groups are combined (or bonded). The combination of two or more organic groups may include, for example, a combination of an aliphatic hydrocarbon group and an alicyclic hydrocarbon group (such as cyclohexylmethyl group or methylcyclohexyl group), a combination of an aliphatic hydrocarbon group and an aromatic hydrocarbon group [e.g., a C₇₋₁₈aralkyl group such as benzyl group or phenethyl group (particularly a C₇₋₁₀aralkyl group), a C₆₋₁₀aryl-C₂₋₆alkenyl group such as cinnamyl group, a C₁₋₄alkyl-substituted aryl group such as tolyl group, and a C₂₋₄alkenyl-substituted aryl group such as styryl group], and a combination of an alkoxy group and an aliphatic hydrocarbon group (such as methoxyethyl group), and a combination of an aliphatic hydrocarbon group and an aryloxy group (such as methylphenoxy group) .

The organic group may further have a substituent. The substituent may include, for example, a halogen atom, oxo group, hydroxy group, hydroperoxy group, amino group, and sulfo group.

As R¹ to R¹⁸, widely used among them is, for example, a hydrogen atom and/or a straight-chain or branched-chain C₁₋₆alkyl group (particularly a straight-chain C₁₋₃alkyl group such as methyl group). From the standpoint of rigidity, it is preferred that at least one of R¹ to R¹⁸ be a hydrogen atom. It is particularly preferred that all R¹ to R¹⁸ be hydrogen atoms.

The linkage group represented by X may include, for example, a divalent hydrocarbon group, a carbonyl group, an ether bond, an ester bond, a carbonate bond, an amide bond, a urethane bond, and a group having a plurality of these linkage groups connected. The divalent hydrocarbon group may include a divalent aliphatic hydrocarbon group, a divalent alicyclic hydrocarbon group, and a divalent aromatic hydrocarbon group.

Examples of the divalent aliphatic hydrocarbon group may include an alkylene group, an alkenylene group, and an alkynylene group.

The alkylene group may include, for example, a C₁₋₂₀alkylene group such as methylene group, ethylene group, propylene group, trimethylene group, butylene group, tetramethylene group, hexamethylene group, isohexylene group, octamethylene group, isooctylene group, decamethylene group, or dodecamethylene group.

Examples of the alkenylene group may include a C₂₋₂₀alkenylene group such as vinylene group, allylene group, methallylene group, 1-propenylene group, isopropenylene group, 1-butenylene group, 2-butenylene group, butadienylene group, pentenylene group, hexenylene group, or octenylene group. The alkenylene group may be an alkenylene group in which some or all carbon-carbon double bonds are epoxidized.

The alkynylene group may include, for example, a C₂₋₂₀alkynylene group such as ethynylene group or propynylene group.

Examples of the divalent alicyclic hydrocarbon group may include a C₃₋₁₂cycloalkylene group such as cyclopropylene group, cyclobutylene group, 1,2-cyclopentylene group, 1,3-cyclopentylene group, cyclopentylidene group, 1,3-cyclohexylene group, 1,4-cyclohexylene group, cyclohexylidene group, or cyclododecane-diyl group (particularly a C₅₋₈cycloalkylene group); a C₃₋₁₂cycloalkenylene group such as cyclohexenylene group; and a C₄₋₁₅crosslinked cyclic hydrocarbon linkage group such as bicycloheptanylene group or bicycloheptenylene group. The divalent alicyclic hydrocarbon group may have an epoxy group. For example, the divalent alicyclic hydrocarbon group may be an epoxyC₅₋₁₂cycloalkylene group such as epoxycyclohexylene group.

The divalent aromatic hydrocarbon group may include, for example, a C₆₋₁₄arylene group such as phenylene group or naphthylene group.

These divalent hydrocarbon groups may be a substituent. The substituent may include, for example, a C₁₋₄alkyl group such as methyl group or ethyl group and a C₁₋₄alkoxy group such as methoxy group or ethoxy group in addition to the substituent exemplified as the substituent of the organic group represented by R¹ to R¹⁸

These linkage groups may be a group in which two or more linkage groups are combined (or bonded or connected) . The combination of two or more linkage groups may include, for example, a combination of a divalent aliphatic hydrocarbon group and a divalent alicyclic hydrocarbon group (for example, cyclohexylenemethylene group, methylenecyclohexylene group, dicyclohexylmethane-4,4'-diyl group, and dicyclohexylpropane-4,4'-diyl group), a combination of a divalent aliphatic hydrocarbon group and a divalent aromatic hydrocarbon group (for example, tolylene group, xylylene group, diphenylmethane-4,4'-diyl group, and diphenylpropane-4,4'-diyl group), a combination of an ester bond and a divalent hydrocarbon group (for example, carbonyloxymethylene group and carbonyloxy-hydrogenated xylyleneoxycarbonyl group), a combination of a carbonate bond and a divalent hydrocarbon group (for example, methyleneoxycarbonyloxymethylene group and methyleneoxycarbonyloxy-hydrogenated xylyleneoxycarbonyloxymethylene group), a combination of a plurality of ester bonds (for example, a polyester bond such as a polycaprolactone), a combination of a plurality of ether bonds (for example, a polyether bond such as a polyoxyethylene group), a combination of a plurality of ether bonds and a plurality of ester bonds (a polyetherester bond), a combination of a plurality of urethane bonds (a polyurethane bond), and a combination of an epoxycycloalkylene group and a polyester bond.

Preferred as X among them is a direct bond, an alkylene group (e.g., a C₁₋₄alkylene group which may have a C₁₋₄alkyl group, such as methylene group, methylmethylene group, dimethylmethylene group, or ethylene group), an ether bond (for example, a C₁₋₄alkyleneoxyC₁₋₄alkylene group such as methyleneoxymethylene group), a combination of an ester bond and an alkylene group (for example, a carbonyloxyC₁₋₄alkylene group such as carbonyloxymethylene group), and/or a combination of a carbonate bond and an alkylene group (for example, a C₁₋₄alkyleneoxycarbonyloxyC₁₋₄alkylene group such as methyleneoxycarbonyloxymethylene group). From the standpoint of excellent slidability and rigidity, the direct bond is particularly preferred.

A preferred alicyclic epoxy compound may include, for example, a diepoxybiC₅₋₈cycloalkyl which may have a C₁₋₄alkyl group (such as methyl group), such as 3,4,3',4'-diepoxybicyclohexyl or (3,4,3',4'-diepoxy-6-methyl)bicyclohexyl; and an epoxyC₅₋₈cycloalkylC₁₋₄alkyl(epoxy)C₅₋₈cycloalkane carboxylate which may have a C₁₋₄alkyl group, such as 3, 4-epoxycyclohexylmethyl (3, 4-epoxy)cyclohexanecarboxylate or 3,4-epoxy-6-methylcyclohexylmethyl(3,4-epoxy-6-methyl)cyclohexane carboxylate.

### (Relationship between curable binder and layer structure)

The polyfunctional (meth)acrylate (A) and/or the epoxy compound (B) may be contained in a curable composition for forming any hardcoat layer (for example, a first curable composition for forming the first hardcoat layer and/or a second curable composition for forming the second hardcoat layer) or may be contained in a curable composition for forming a hardcoat layer free from the adhesion-imparting component (for example, the first or second curable composition).

Among them, in view of an improvement in hardness and abrasion resistance, it is preferred that the polyfunctional (meth)acrylate (A) be at least contained, and a combination of the polyfunctional (meth)acrylate (A) and the epoxy compound (B) (particularly a combination of a di- to octa-functional (meth)acrylate and a polyfunctional alicyclic epoxy compound) is particularly preferred. A curable composition containing a combination of the polyfunctional (meth) acrylate (A) and the epoxy compound (B) may be a curable composition for forming any hardcoat layer, and is preferably the first curable composition. The curable composition containing this combination (particularly the first curable composition) may be free from the adhesion-imparting component, and it is particularly preferred that the curable composition further contain the adhesion-imparting component.

For the combination of the polyfunctional (meth)acrylate (A) and the epoxy compound (B), the ratio of the epoxy compound (B) relative to 100 parts by weight of the polyfunctional (meth)acrylate (A) is about 1 to 100 parts by weight, preferably about 5 to 80 parts by weight, and more preferably about 10 to 60 parts by weight (particularly about 15 to 50 parts by weight) . In a case where the ratio of the epoxy compound (B) is too low, cure shrinkage of the laminate may occur. In a case where the ratio of the epoxy compound (B) is too high, the hardcoat layer may have a lowered abrasion resistance.

In each hardcoat layer, the proportion of the curable binder with respect to the hardcoat layer may be not less than 50% by weight, and is, for example, about 50 to 99.9% by weight, preferably about 60 to 99.5% by weight, and more preferably about 80 to 99% by weight. In a case where the proportion of the curable binder is too small, the hardcoat layer may have a lowered hardness or abrasion resistance.

### (Inorganic particle)

The curable composition may further contain an inorganic particle in view of an improvement in hardness and abrasion resistance. The inorganic particle may be contained in either the first curable composition or the second curable composition, and is preferably contained in both curable compositions.

The inorganic particle may include, for example, a silica particle, a titania particle, a zirconia particle, and an alumina particle. These inorganic particles may be used alone or in combination. In terms of prevented coloring of the cured product, preferred among these inorganic particles is a silica particle (particularly a silica nanoparticle), and particularly preferred is a solid silica nanoparticle.

The silica nanoparticle may have an average particle size of not more than 100 nm, and, for example, has an average particle size of about 1 to 100 nm, preferably about 3 to 50 nm, and more preferably 5 to 30 nm (particularly about 8 to 20 nm). In a case where the particle size is too large, the hardcoat layer may have a lowered transparency. In this description and claims, the average particle size of the inorganic particle can be measured based on a dynamic light scattering method.

It is preferred that the inorganic particle (particularly the silica nanoparticle) have a reactive group to a (meth)acryloyl group and/or an epoxy group. Such a reactive group may include, for example, a hydroxyl group, a carboxyl group, an amino group, a (meth) acryloyl group, a vinyl group, an epoxy group, an oxetanyl group, and a thiirane group. The inorganic particle may have the reactive group(s) alone or in combination. Preferred among these reactive groups is a hydroxyl group, a (meth)acryloyl group, and/or an epoxy group, and particularly preferred is a hydroxyl group. In particular, the inorganic particle may have a reactive group (for example, a hydroxyl group) to an epoxy group and be used in combination with an epoxy compound.

The ratio of the inorganic particle relative to 100 parts by weight of the curable binder is, for example, about 1 to 100 parts by weight, preferably about 10 to 80 parts by weight, and more preferably about 20 to 50 parts by weight (particularly about 30 to 40 parts by weight). Too low a ratio of the inorganic particle may fail to show an effect improving abrasion resistance. Too high a ratio of the inorganic particle may make the transparency of the hardcoat layer low.

### (Radical polymerization initiator)

In a case where the curable composition contains a radical-polymerizable compound such as a polyfunctional (meth)acrylate, the curable composition may contain a commonly used radical polymerization initiator. The radical polymerization initiator may be an initiator that generates a radical by light irradiation.

Such a radical polymerization initiator may include, for example, a benzoin compound (e.g., benzoin and a benzoin alkyl ether compound such as benzoin methyl ether, benzoin ethyl ether, or benzoin isopropyl ether), a phenyl ketone compound [for example, an alkyl phenyl ketone compound such as an acetophenone compound (e.g., acetophenone, 2-hydroxy-2-methyl-1-phenylpropan-1-one, 2,2-dimethoxy-2-phenylacetophenone, 2,2-diethoxy-2-phenylacetophenone, and 1,1-dichloroacetophenone), 2-hydroxy-2-methylpropiophenone, or 1-hydroxycyclohexyl phenyl ketone; and a cycloalkyl phenyl ketone compound such as 1-hydroxycyclohexyl phenyl ketone], an aminoacetophenone compound {such as 2-methyl-1-[4-(methylthio)phenyl]-2-morpholinoaminopropanone-1 or 2-benzyl-2-dimethylamino-1-(4-morpholinophenyl)-butanone-1}, an anthraquinone compound (such as anthraquinone, 2-methylanthraquinone, 2-ethylanthraquinone, 2-t-butylanthraquinone, or 1-chloroanthraquinone), a thioxanthone compound (such as 2,4-dimethylthioxanthone, 2,4-diethylthioxanthone, 2-chlorothioxanthone, or 2,4-diisopropylthioxanthone), a ketal compound (such as acetophenone dimethyl ketal, or benzyl dimethyl ketal), a benzophenone compound (such as benzophenone), a xanthone compound, a phosphine oxide compound (for example, 2,4,6-trimethylbenzoyldiphenylphosphine oxide), an amyloxime compound, a tetramethylthiuram monosulfide compound, and an oxetane compound. These radical polymerization initiators may be used alone or in combination. Widely used among them is, for example, a cycloalkyl phenyl ketone compound.

The radical polymerization initiator may be a commercially available radical polymerization initiator. As the commercially available radical polymerization initiator, there may be used, for example, "KAYACURE EPA" and "KAYACURE DETX", each manufactured by Nippon Kayaku Co., Ltd.; "Irgacure 184" and "Irgacure 907", each manufactured by BASF Japan Ltd. ; and "B-CIM" manufactured by Hodogaya Chemical Co., Ltd.

The ratio of the radical polymerization initiator is, for example, about 0.1 to 15 parts by weight, preferably about 0.5 to 10 parts by weight, and more preferably about 1 to 7 parts by weight (particularly about 1 to 5 parts by weight), relative to 100 parts by weight of the curable binder having a radical-polymerizable group, such as a polyfunctional (meth)acrylate or a silicone (meth)acrylate.

The radical polymerization initiator may be used in combination with a photosensitizer. The photosensitizer may include a commonly used component, for example, a tertiary amine compound [for example, a trialkylamine, a trialkanolamine (e.g., triethanolamine), an alkyl ester of a dialkylaminobenzoic acid such as ethyl N,N-dimethylaminobenzoate or amyl N,N-dimethylaminobenzoate, and a bis(dialkylamino)benzophenone such as 4,4-bis(dimethylamino)benzophenone (Michler's ketone) or 4,4'-diethylaminobenzophenone], a phosphine compound such as triphenylphosphine or tri-n-butylphosphine, a toluidine compound such as N,N-dimethyltoluidine, and an anthracene compound such as 9,10-dimethoxyanthracene, 2-ethyl-9,10-dimethoxyanthracene, or 2-ethyl-9,10-diethoxyanthracene. The photosensitizer may be used alone or in combination.

The ratio of the photosensitizer is, for example, about 0.1 to 100 parts by weight, preferably about 1 to 75 parts by weight, and more preferably about 5 to 50 parts by weight, relative to 100 parts by weight of the radical polymerization initiator.

### (Cationic polymerization initiator)

In a case where the curable composition contains an epoxy compound such as a polyfunctional alicyclic epoxy compound, the curable composition may contain a commonly used cationic polymerization initiator. The cationic polymerization initiator may be an initiator that generates an acid by light irradiation (an acid generator).

Such a cationic polymerization initiator may include, for example, a sulfonium salt (a salt of a sulfonium ion and an anion), a iodonium salt (a salt of an iodonium ion and an anion), a selenium salt (a salt of a selenium ion and an anion), an ammonium salt (a salt of an ammonium ion and an anion), a phosphonium salt (a salt of a phosphonium ion and an anion), and a salt of a transition metal complex ion and an anion. These photoacid generators may be used alone or in combination. Preferred among these photoacid generators is an acid generator having a high acidity, for example, a sulfonium salt in view of an improvement in the reactivity and an improvement in the hardness of the cured product.

The sulfonium salt may include, for example, a triarylsulfonium salt such as a triphenylsulfonium salt, a tri-p-tolylsulfonium salt, a tri-o-tolylsulfonium salt, a tris(4-methoxyphenyl)sulfonium salt, a 1-naphthyldiphenylsulfonium salt, a 2-naphthyldiphenylsulfonium salt, a tris(4-fluorophenyl)sulfonium salt, a tri-1-naphthylsulfonium salt, a tri-2-naphthylsulfonium salt, a tris(4-hydroxyphenyl)sulfonium salt, a diphenyl[4-(phenylthio)phenyl]sulfonium salt, a [4-(4-biphenylthio)phenyl]-4-biphenylphenylsulfonium salt, or 4-(p-tolylthio)phenyldi-(p-phenyl)sulfonium salt; a diarylsulfonium salt such as a diphenylphenacylsulfonium salt, a diphenyl-4-nitrophenacylsulfonium salt, a diphenylbenzylsulfonium salt, or a diphenylmethylsulfonium salt; a monoarylsulfonium salt such as a phenylmethylbenzylsulfonium salt, a 4-hydroxyphenylmethylbenzylsulfonium salt, or a 4-methoxyphenylmethylbenzylsulfonium salt; and a trialkylsulfonium salt such as a dimethylphenacylsulfonium salt, a phenacyltetrahydrothiophenium salt, or a dimethylbenzylsulfonium salt. These sulfonium salts may be used alone or in combination. Preferred among these sulfonium salts is a triarylsulfonium salt.

The anion (counter ion) for forming a salt with a cation may include, for example, SbF₆⁻, PF₆⁻, BF₄⁻, a fluoroalkylfluorophosphate ion [such as (CF₃CF₂)₃PF₃⁻or (CF₃CF₂CF₂)₃PF₃⁻], (C₆F₅)₄B⁻, (C₆F₅)₄Ga⁻, a sulfonate anion (such as trifluoromethanesulfonate anion, pentafluoroethanesulfonate anion, nonafluorobutanesulfonate anion, methanesulfonate anion, benzenesulfonate anion, or p-toluenesulfonate anion), (CF₃SO₂)₃C⁻, (CF₃SO₂)₂N⁻, a perhalogenate ion, a halosulfonate ion, a sulfate ion, a carbonate ion, an aluminate ion, a hexafluorobismuthate ion, a carboxylate ion, an arylborate ion, a thiocyanate ion, and a nitrate ion. Preferred among these anions is a fluoroalkylfluorophosphate ion in view of, for example, solubility.

The cationic polymerization initiator may be a commercially available cationic polymerization initiator. As the commercially available cationic polymerization initiator, there may be utilized, for example, "CPI-101A", "CPI-110A", "CPI-100P", "CPI-110P", "CPI-210S", and "CPI-200K", each manufactured by San-Apro Ltd.

The ratio of the cationic polymerization initiator is, for example, about 0.01 to 20 parts by weight, preferably about 0.1 to 10 parts by weight, and more preferably about 0.5 to 8 parts by weight, relative to 100 parts by weight of the curable binder (epoxy compound) such as a polyfunctional alicyclic epoxy compound.

### (Other components)

The curable composition may further contain other components, for example, a leveling agent, a slipping agent, another curable compound, a resin component, and a commonly used additive.

The leveling agent may include a commonly used leveling agent, for example, an ethylene oxide adduct of acetylene glycol, a silicone-series leveling agent, and a fluorine-series leveling agent. These leveling agents may be used alone or in combination. Preferred among them is a fluorine-series leveling agent in view of an improvement in surface smoothness. In order to improve the mechanical properties of the hardcoat layer, it is preferred that the leveling agent have a reactive group (for example, a hydroxyl group) to the curable binder. Further, in view of an improvement in surface smoothness, it is preferred that the leveling agent be added to a curable composition for forming a hardcoat layer situated at the surface of the laminate (for example, the second curable composition).

The slipping agent may be, for example, a silicone compound. In view of an improvement in the mechanical properties of the hardcoat layer, preferred is a silicone compound having a polymerizable group, and particularly preferred is a silicone (meth)acrylate.

The silicone (meth)acrylate usually has an organosiloxane unit [-Si(R)₂-O-] (wherein the group R represents a substituent), and the number of Si atoms (or organosiloxane units) per molecule may be not less than 1 (for example, about 1 to 30, preferably about 1 to 20, and more preferably about 1 to 15). Moreover, the number of (meth) acryloyl groups per molecule may be not less than 2 (for example, about 2 to 20, preferably about 2 to 15, and more preferably about 2 to 10).

The silicone (meth)acrylate may be a monomer, an oligomer (or prepolymer), or a combination a monomer and an oligomer. The oligomer (prepolymer) may be a polysiloxane-series oligomer having a plurality of (-Si-O) bonds or may be a polymer, such as a dimer or a trimer, obtainable by hydrolytic condensation of a silicone (meth)acrylate monomer having a hydrolytically condensable group (for example, a C₁₋₄alkoxy group such as methoxy or ethoxy, and a halogen atom such as chlorine atom).

Representative examples of the silicone (meth)acrylate may include a silicone di- to tetra- (meth) acrylate having one Si atom per molecule, and a silicone tetra- to hexa-(meth)acrylate having two Si atoms per molecule. Preferred among these silicone (meth)acrylates is a silicone (meth)acrylate component having a plurality of (for example, about 2 to 10, preferably about 3 to 8, and more preferably about 4 to 7) (meth)acryloyl groups and one or a plurality of (for example, about 1 to 20, preferably about 1 to 10, and more preferably about 1 to 6) Si atom(s) per molecule [for example, a silicone di- to hexa-(meth)acrylate, preferably a silicone tri- to hexa-(meth)acrylate].

Furthermore, in view of an improvement in surface smoothness, it is preferred that the slipping agent be added to a curable composition for forming a hardcoat layer situated at the surface of the laminate (for example, the second curable composition).

As examples of another curable compound, there may be mentioned (meth)acrylic acid, styrene, vinylpyrrolidone, and styrene.

The resin component may include, for example, a styrene-series resin, a (meth)acrylic polymer, a vinyl acetate-series polymer, a vinyl ether-series polymer, a halogen-containing resin, an alicyclic polyolefin, a polycarbonate, a polyester, a polyamide, a cellulose derivative, a silicone-series resin, and a rubber or elastomer.

The commonly used additive may include, for example, a stabilizer (such as an antioxidant or an ultraviolet absorber), a surfactant, a water-soluble polymer, a filler, a crosslinking agent, a coupling agent, a coloring agent, a flame retardant, a lubricant other than the slipping agent, a wax, a preservative, a viscosity modifier, a thickener, and an antifoaming agent.

The total ratio of these other components is, for example, about 0.01 to 30 parts by weight, preferably about 0.05 to 20 parts by weight, and more preferably about 0.1 to 10 parts by weight, relative to 100 parts by weight of the curable binder. In particular, the ratio of each of the leveling agent and the slipping agent is, for example, about 0.01 to 10 parts by weight, preferably about 0.1 to 5 parts by weight, and more preferably about 0.5 to 3 parts by weight, relative to 100 parts by weight of the curable binder (particularly the curable binder contained in the second curable composition).

### (Thickness of hardcoat layer)

The hardcoat layer may have a total thickness (average thickness) of not more than 60 µm, and has a total thickness (average thickness) of, for example, about 20 to 60 µm, preferably about 25 to 55 µm, and more preferably about 30 to 50 µm. The total thickness of the first hardcoat layer and the second hardcoat layer may be not more than 60 µm and is, for example, about 20 to 60 µm, preferably about 30 to 50 µm, and more preferably about 35 to 45 µm. In a case where the total thickness of the hardcoat layer is too small, the hardcoat property such as abrasion resistance may be reduced.

The thickness ratio (average thickness ratio) of the first hardcoat layer relative to the second hardcoat layer is not particularly limited to a specific one. The thickness of the first hardcoat layer can be selected from a range of about 0.5 to 10 times (for example, about 1 to 8 times) the thickness of the second hardcoat layer. In a case where the first hardcoat layer contains a combination of a polyfunctional (meth)acrylate and an epoxy compound and the second hardcoat layer contains a silicone (meth)acrylate, the thickness (average thickness) of the first hardcoat layer is, for example, about 1.5 to 8 times, preferably about 2 to 5 times, and more preferably 2.5 to 4 times, the thickness (average thickness) of the second hardcoat layer.

### [Other layers]

The hardcoat laminate of the present invention has the hardcoat layers laminated on a first side of the substrate layer and may have a pressure sensitive adhesive layer on at least part of a second side of the substrate layer (or an opposite side with respect to the first side having the hardcoat layers laminated thereon). The laminate of the present invention has an excellent transparency and is thus utilizable for optical applications. The laminate which has the pressure sensitive adhesive layer can also be used as a protective film for various touch screen displays including a smartphone and a tablet personal computer (PC).

The pressure sensitive adhesive layer comprises a commonly used transparent pressure sensitive adhesive. As examples of the pressure sensitive adhesive, there may be mentioned a rubber-based pressure sensitive adhesive, an acrylic pressure sensitive adhesive, an olefinic pressure sensitive adhesive (a modified-olefinic pressure sensitive adhesive), and a silicone-based pressure sensitive adhesive.

The rubber-based pressure sensitive adhesive may include, for example, a combination of a rubber component (such as a natural rubber, a synthetic rubber, or a thermoplastic elastomer) and a tackifier (such as a terpene resin, a rosin-based resin, a petroleum resin, or a modified-olefinic resin).

As the acrylic pressure sensitive adhesive, there may be used, for example, a pressure sensitive adhesive containing an acrylic copolymer containing a C₂₋₁₀alkyl ester of acrylic acid (such as ethyl acrylate, butyl acrylate, or 2-ethylhexyl acrylate) as a main component. A copolymerizable monomer for the acrylic copolymer may include, for example, a (meth)acrylic monomer [for example, (meth)acrylic acid, methyl (meth)acrylate, hydroxyethyl (meth)acrylate, hydroxypropyl (meth)acrylate, dimethylaminoethyl (meth)acrylate, glycidyl (meth)acrylate, acrylamide, and N-methylolacrylamide], a polymerizable nitrile compound [for example, (meth)acrylonitrile], an unsaturated dicarboxylic acid or a derivative thereof (for example, maleic anhydride and itaconic acid), a vinyl ester compound (for example, vinyl acetate and vinyl propionate), and an aromatic vinyl compound (for example, styrene).

The olefinic pressure sensitive adhesive may include, for example, an ethylene-(meth)acrylic acid copolymer, an ethylene-2-hydroxyethyl (meth)acrylate copolymer, an ethylene-glycidyl (meth)acrylate copolymer, an ethylene-vinyl acetate-(meth)acrylic acid copolymer, an ethylene-ethyl (meth)acrylate-maleic acid (anhydride) copolymer, and a partially saponified product of an ethylene-vinyl acetate copolymer.

As the silicone-based pressure sensitive adhesive, there may be used, for example, a pressure sensitive adhesive having a silicone rubber component and a silicone resin component dissolved in an organic solvent. The silicone rubber component may include, e.g., an MQ resin composed of a monofunctional R₃SiO_{1/2} (wherein R represents an alkyl group such as methyl group, an aryl group such as phenyl group, and the like; the same applies hereinafter) and a tetrafunctional SiO₂. The silicone resin component may include, for example, an oily or gummy component containing a difunctional R₂SiO alone or a difunctional R₂SiO and a monofunctional R₃SiO_{1/2} in combination). The silicone rubber component may be crosslinked.

Preferred among these pressure sensitive adhesives is a silicone-based pressure sensitive adhesive in view of optical characteristics, reworkability, or other characteristics.

The pressure sensitive adhesive layer has a thickness (average thickness) of, for example, about 1 to 150 µm, preferably about 10 to 100 µm, and more preferably about 20 to 70 µm (particularly about 25 to 50 µm).

The laminate which includes the pressure sensitive adhesive layer may have a release film laminated on the pressure sensitive adhesive layer in view of handleability or other characteristics.

The hardcoat laminate of the present invention may further have a protective layer laminated on the surface of the hardcoat layer from the viewpoint of prevention of dust adhesion or staining. The protective layer may contain a relatively soft plastic (for example, a polyolefin such as a polyethylene resin).

The protective layer has a thickness (average thickness) of, for example, about 10 to 100 µm, preferably about 30 to 90 µm, and more preferably about 50 to 80 µm.

### [Characteristics of hardcoat laminate]

The hardcoat laminate of the present invention has an excellent transparency. The hardcoat laminate may have a total light transmittance of not less than 70%, and, for example, has a total light transmittance of about 70 to 99.9%, preferably about 75 to 99%, and more preferably about 80 to 98% (particularly about 85 to 95%) .

The hardcoat laminate of the present invention has a low haze. The haze may be not more than 30% (particularly not more than 10%) and may be, for example, about 0 to 30%, preferably about 0.1 to 20%, and more preferably about 0.5 to 10% (particularly about 1 to 5%) .

In this description and claims, the total light transmittance can be measured in accordance with Japanese Industrial Standards (JIS) K7361, and the haze can be measured in accordance with JIS K7163.

The hardcoat laminate of the present invention has excellent mechanical properties such as flexural fatigue resistance. In a bend test by cylindrical mandrel in accordance with JIS K5600-5-1 (1999), a mandrel over which a coating cracks or becomes separated (or detached) has a diameter of, for example, not more than 10 mm (for example, 1 to 10 mm), preferably not more than 8 mm, and more preferably not more than 6 mm.

The hardcoat laminate of the present invention has a high hardness. According to scratch hardness by a pencil method in accordance with JIS K5600-5-4 (1999), the surface of the second hardcoat layer may have a pencil hardness of, for example, not less than 5H, preferably not less than 6H, and more preferably not less than 8H (particularly not less than 9H).

### [Process for producing hardcoat laminate]

The hardcoat laminate of the present invention can be produced by a commonly used process. For example, the laminate which includes the substrate layer, the first hardcoat layer, and the second hardcoat layer is produced through a first hardcoat layer forming step of applying the first curable composition to the substrate layer and then curing the applied composition, and a second hardcoat layer forming step of applying the second curable composition to the cured first hardcoat layer and then curing the applied composition.

In applying the first and second curable compositions, the method of applying (or coating) may include a commonly used method, for example, a roll coater, an air knife coater, a blade coater, a rod coater, a reverse coater, a bar coater, a comma coater, a dip and squeeze coater, a die coater, a gravure coater, a microgravure coater, a silkscreen coater, a dipping method, a spraying method, and a spinner method. Widely used among these methods is a bar coater and/or a gravure coater.

For the first and second curable compositions which contain an organic solvent, each composition may optionally be dried after being applied. The drying may be carried out, for example, at a temperature of about 40 to 150°C, preferably about 50 to 120°C, and more preferably about 60 to 100°C (particularly about 70 to 90°C) . The drying time is not particularly limited to a specific one and can be selected from a range of about 30 seconds to one hour. For example, the drying time is about 30 seconds to 30 minutes and preferably about 1 to 10 minutes.

The organic solvent can be selected according to the species of the curable binder in the curable composition and may include, for example, a ketone compound (such as acetone, methyl ethyl ketone, methyl isobutyl ketone, or cyclohexanone), an ether compound (such as dioxane or tetrahydrofuran), an aliphatic hydrocarbon compound (such as hexane), an alicyclic hydrocarbon compound (such as cyclohexane), an aromatic hydrocarbon compound (such as toluene or xylene), a halocarbon compound (such as dichloromethane or dichloroethane), an ester compound (such as methyl acetate, ethyl acetate, or butyl acetate), water, an alcohol compound (such as ethanol, isopropanol, butanol, or cyclohexanol), a cellosolve compound [such as methyl cellosolve, ethyl cellosolve, or propylene glycol monomethyl ether (1-methoxy-2-propanol)], a cellosolve acetate compound, a sulfoxide compound (such as dimethyl sulfoxide), and an amide compound (such as dimethylformamide or dimethylacetamide). These organic solvents may be used alone or in combination. In a case where the first curable composition contains a polyfunctional (meth)acrylate and a polyfunctional alicyclic epoxy compound, the organic solvent may be an ester compound such as butyl acetate. In a case where the second curable composition contains a silicone (meth)acrylate, the organic solvent may be a ketone compound such as methyl ethyl ketone.

The ratio of the organic solvent relative to 100 parts by weight of the curable binder is, for example, about 1 to 100 parts by weight, preferably about 3 to 50 parts by weight, and more preferably about 5 to 40 parts by weight.

In curing the first and second curable compositions, the curable compositions may be cured by irradiation with an active energy ray (or actinic ray) depending on the species of the radical polymerization initiator or the cationic polymerization initiator. As the active energy ray, heat and/or a light energy ray may be used. In particular, the light irradiation with the light energy ray is useful. As the light energy ray, there may be used, for example, a radioactive ray (such as gamma ray or X-ray), an ultraviolet ray, a visible ray, and an electron beam (EB). The light energy ray is usually an ultraviolet ray.

For the ultraviolet ray in an example, a light source may include, for example, a Deep UV lamp, a low-pressure mercury lamp, a high-pressure mercury lamp, a superhigh-pressure mercury lamp, a halogen lamp, and a laser light source (a light source such as a helium-cadmium laser or an excimer laser). The quantity of the irradiation light (irradiation energy) varies depending on the species of the curable binder and/or the thickness of the coating. The quantity of the irradiation light may be, for example, about 50 to 10000 mJ/cm², preferably about 70 to 5000 mJ/cm², and more preferably about 100 to 1000 mJ/cm².

If necessary (for example, for the second curable composition containing a silicone (meth)acrylate), the irradiation with the active energy ray may be conducted in an atmosphere of an inactive gas (for example, nitrogen gas, argon gas, and helium gas).

The resulting hardcoat laminate has prevented or reduced occurrence of separation, breakage, and/or cracks in punching. Thus, the hardcoat laminate may be subjected to punching to form the laminate into a desired shape.

### EXAMPLES

The following examples are intended to describe this invention in further detail and should by no means be interpreted as defining the scope of the invention. Materials used in Examples and Comparative Examples are as follows. The resulting hardcoat laminates were evaluated according to the following methods.

### [Materials]

Nanosilica-containing alicyclic epoxy compound (abbreviation: Nanosilica-containing alicyclic epoxy): "NanopoxC620" manufactured by Evonik Industries AG, a compound having 40 parts by weight of hydroxy group-containing silica (average particle size of silica: 20 nm) dispersed in 60 parts by weight of 3,4-epoxycyclohexylmethyl (3,4-epoxy)cyclohexanecarboxylate
Pentaerythritol (tri/tetra)acrylate (abbreviation: PETRA): a mixture of pentaerythritol triacrylate and pentaerythritol tetraacrylate, "PETRA" manufactured by Daicel-Allnex Ltd.
Nanosilica-containing UV-curable polyfunctional acrylate (abbreviation: Nanosilica-containing polyfunctional acrylate): "XR39-C6210" manufactured by Momentive Performance Materials Inc., solid content of 60% by weight
Dipentaerythritol polyacrylate (abbreviation: DPPA): "A-9550" manufactured by Shin-Nakamura Chemical Co., Ltd.
Octyl/decyl acrylate (adhesion-imparting component) : a mixture of octyl acrylate and decyl acrylate, "ODN-A" manufactured by Daicel-Allnex Ltd.
2-(Allyloxymethyl)acrylic acid methyl ester (adhesion-imparting component) : "FX-MO-MA" manufactured by NIPPON SHOKUBAI CO., LTD.
Multibranched polyvinyl compound (adhesion-imparting component) : "PDV-AH" manufactured by NIPPON STEEL & SUMITOMO METAL CORPORATION
UV-reactive surface improver (leveling agent): "MEGAFACE RS-91" manufactured by DIC Corporation
Silicone acrylate (slipping agent): "KRM-8479" manufactured by Daicel-Allnex Ltd., containing 15% by weight acetone
Radical polymerization initiator: "Irgacure 184" manufactured by BASF Japan Ltd.
Cationic polymerization initiator: "CPI-210S" manufactured by San-Apro Ltd.
Butyl acetate: manufactured by Wako Pure Chemical Industries, Ltd.
Methyl ethyl ketone: manufactured by Wako Pure Chemical Industries, Ltd.
Transparent PET film: "Easy Adhesive PET A2330" manufactured by TOYOBO CO., LTD., a polyethylene terephthalate film having easily adhesive layer, thickness: 180 µm

### [Adhesion]

The hardcoat layers of the hardcoat laminates obtained in Examples and Comparative Examples were measured for adhesion by a cross-cut test in accordance with JIS K5600-5-6.

A: No separation
B: Partly separated
C: Wholly separated

### [Haze]

The hardcoat laminates obtained in Examples and Comparative Examples were measured for haze using a haze meter ("NDH5000W" manufactured by NIPPON DENSHOKU INDUSTRIES CO., LTD.) in accordance with JIS K7163.

### [Total light transmittance]

The hardcoat laminates obtained in Examples and Comparative Examples were measured for total light transmittance using a haze meter ("NDH5000W" manufactured by NIPPON DENSHOKU INDUSTRIES CO., LTD.) in accordance with JIS K7361.

### [Bendability]

In accordance with JIS K5600-5-1, a hardcoat laminate was wrapped around a shaft (mandrel) with a hardcoat layer of the hardcoat laminate facing outside, and the diameter of the first (smallest) mandrel over which the hardcoat layer cracked and/or become separated (or detached) was determined.

### [Pencil hardness]

Scratch hardness was measured by a pencil method in accordance with JIS K5600-5-4.

### [Punchability]

Each of the hardcoat laminates obtained in Examples and Comparative Examples was evaluated for punchability as follows. On a hardcoat layer of a hardcoat laminate, a polyethylene protective film (thickness: 60 µm) was laminated by a roller. From an OCA tape having a pressure sensitive adhesive layer made of an acrylic resin (the thickness of the pressure sensitive adhesive layer: 25 µm), a release film on a weakly releasable side of the tape was released, and the residual OCA tape was laminated by a roller on a substrate layer of the hardcoat laminate (that is, on an opposite side with respect to the side having the hardcoat layers thereon). The resulting laminate film was punched from the protective layer side by a Thompson blade and was checked and evaluated for the state of the laminate film by an optical microscope. The shape to be punched by the Thompson blade are shown in Fig. 1. In Fig. 1, the unit of the numerals is mm, and R2, R4, R6, and R8 show that the corresponding R-shaped corners have a curvature radius of 2 mm, 4 mm, 6 mm, and 8 mm.

### Example 1

### (Preparation of first coat liquid)

A coat liquid a1 was produced by mixing and dissolving 40 parts by weight of the nanosilica-containing alicyclic epoxy compound, 60 parts by weight of the pentaerythritol (tri/tetra)acrylate, 2 parts by weight of the radical polymerization initiator, 1.3 parts by weight of the cationic polymerization initiator, 1 part by weight of the octyl/decyl acrylate as an adhesion-imparting component, and 5.5 parts by weight of the butyl acetate.

### (Preparation of second coat liquid)

A coat liquid b1 was produced by mixing and dissolving 100 parts by weight of the nanosilica-containing UV-curable polyfunctional acrylate, 0.6 parts by weight of the UV-reactive surface improver, 0.6 parts by weight of the silicone acrylate, and 21.2 parts by weight of the methyl ethyl ketone.

### (Production of coating)

The coat liquid a1 was applied to the transparent PET film by a Meyer bar and dried at a temperature of 80°C for 3 minutes. Then, the coated liquid was irradiated with ultraviolet ray at 100 mJ/cm² under an air atmosphere to give a first hardcoat layer having a thickness of 30 µm. Thereafter, the coat liquid b1 was applied to the first hardcoat layer by a Meyer bar and dried at 90°C for one minute. Then, the coated liquid was irradiated with ultraviolet ray at 400 mJ/cm² under a nitrogen atmosphere to give a second hardcoat layer having a thickness of 10 µm. Thereafter, the resulting film was heat-treated at 80°C for 2 hours to give a hardcoat laminate 1.

### Example 2

A hardcoat laminate 2 was produced in the same manner as Example 1 except that a coat liquid a2 was prepared without addition of the octyl/decyl acrylate as an adhesion-imparting component in the preparation of the first coat liquid and that a coat liquid b2 was prepared with addition of 0.6 parts by weight of the octyl/decyl acrylate as an adhesion-imparting component in the preparation of the second coat liquid.

### Example 3

A hardcoat laminate 3 was produced in the same manner as Example 1 except that the coat liquid b2 prepared in the same manner as Example 2 was used as the second coat liquid.

### Example 4

A hardcoat laminate 4 was prepared in the same manner as Example 1 except that a coat liquid a3 was prepared with addition of 1 part by weight of the (2-allyloxymethyl)acrylic acid methyl ester instead of the octyl/decyl acrylate as an adhesion-imparting component in the preparation of the first coat liquid and that a coat liquid b3 was prepared with addition of 0.6 parts by weight of the (2-allyloxymethyl)acrylic acid methyl ester as an adhesion-imparting component in the preparation of the second coat liquid.

### Example 5

A hardcoat laminate 5 was produced in the same manner as Example 4 except that a coat liquid a4 was prepared with addition of 60 parts by weight of the dipentaerythritol polyacrylate instead of the pentaerythritol (tri/tetra)acrylate in the preparation of the first coat liquid.

### Example 6

A hardcoat laminate 6 was produced in the same manner as Example 1 except that a coat liquid a5 was prepared with addition of 1 part by weight of the multibranched polyvinyl compound instead of the octyl/decyl acrylate as an adhesion-imparting component in the preparation of the first coat liquid and that a coat liquid b4 was prepared with addition of 0.6 parts by weight of the multibranched polyvinyl compound as an adhesion-imparting component in the preparation of the second coat liquid.

### Comparative Example 1

A hardcoat laminate 7 was produced in the same manner as Example 1 except that the coat liquid a2 was prepared in the same manner as Example 2 in the preparation of the first coat liquid.

### Comparative Example 2

A hardcoat laminate 8 was produced in the same manner as Example 1 except that a coat liquid a6 was prepared with addition of 60 parts by weight of the dipentaerythritol polyacrylate instead of the pentaerythritol (tri/tetra) acrylate and without addition of octyl/decyl acrylate as an adhesion-imparting component in the preparation of the first coat liquid.

Table 1 shows main compositions of the coat liquids used in Examples and Comparative Examples. Table 2 shows evaluation results of characteristics of the hardcoat laminates obtained in Examples and Comparative Examples.

### [Table 1]

**Table 1**

| | |
|---|---|
| Coat liquid a1 | 40 parts of Nanosilica-containing alicyclic epoxy + 60 parts of PETRA + 1 part of Octyl/decyl acrylate |
| Coat liquid a2 | 40 part of Nanosilica-containing alicyclic epoxy + 60 parts of PETRA |
| Coat liquid a3 | 40 parts of Nanosilica-containing alicyclic epoxy + 60 parts of PETRA + 1 part of (2-Allyloxymethyl)acrylic acid methyl ester |
| Coat liquid a4 | 40 parts of Nanosilica-containing alicyclic epoxy + 60 parts of DPPA + 1 part of (2-Allyloxymethyl)acrylic acid methyl ester |
| Coat liquid a5 | 40 parts of Nanosilica-containing alicyclic epoxy + 60 parts of PETRA + 1 part of Multibranched polyvinyl compound |
| Coat liquid a6 | 40 parts of Nanosilica-containing alicyclic epoxy + 60 parts of DPPA |
| Coat liquid b1 | 100 parts of Nanosilica-containing polyfunctional acrylate |
| Coat liquid b2 | 100 parts of Nanosilica-containing polyfunctional acrylate + 0.6 parts of Octyl/decyl acrylate |
| Coat liquid b3 | 100 parts of Nanosilica-containing polyfunctional acrylate + 0.6 parts of (2-Allyloxymethyl)acrylic acid methyl ester |
| Coat liquid b4 | 100 parts of Nanosilica-containing polyfunctional acrylate + 0.6 parts of Multibranched polyvinyl compound |

### [Table 2]

**Table 2**

| | First coat liquid | Second coat liquid | Adhesion | Haze | Total light transmittance | Bendability | Pencil hardness | Punchability |
|---|---|---|---|---|---|---|---|---|
| Example 1 | a1 | b1 | A | 3% | 90% | 6 mm | 8H | Breakage at only R=2mm |
| Example 2 | a2 | b2 | A | 3% | 90% | 6 mm | 8H | Breakage at only R = 2 mm |
| Example 3 | a1 | b2 | A | 3% | 90% | 5 mm | 8H | Breakage at only R = 2 mm |
| Example 4 | a3 | b3 | A | 3% | 90% | 5 mm | 8H | Breakage at only R = 2 mm |
| Example 5 | a4 | b3 | A | 6% | 90% | 5 mm | 9H | Breakage at only R=2mm |
| Example 6 | a5 | b4 | A | 3% | 90% | 5 mm | 8H | Breakage at only R = 2 mm |
| Comparative Example 1 | a2 | b1 | C | 3% | 90% | 6 mm | 8H | Breakage at all of R = 2 to 8 mm |
| Comparative Example 2 | a6 | b1 | C | 6% | 90% | 6 mm | 9H | Breakage at all of R = 2 to 8 mm |

As apparent from the results in Table 1, the hardcoat laminates of Examples have excellent adhesion, transparency, bendability, hardness, and punchability. In contrast, the hardcoat laminates of Comparative Examples have low adhesion and punchability.

### INDUSTRIAL APPLICABILITY

The hardcoat laminate of the present invention is usable as a protective film for a variety of displays (apparatuses or devices), for example, a liquid crystal display (LCD) apparatus, a cathode ray tube display apparatus, an organic or inorganic electroluminescence (EL) display, a field emission display (FED), a surface-conduction electron-emitter display (SED), a rear projection television display, a plasma display, a touch panel-equipped display apparatus.

Among others, the hardcoat laminate of the present invention has excellent abrasion resistance and transparency and is thus useful for various displays including a PC monitor and a television. The hardcoat laminate is particularly useful as a protective film for a display for car navigation systems, a display for a smartphone or a tablet personal computer (PC), and a display apparatus equipped with a touch panel and as an aftermarket protective film (protection film) for a liquid crystal display apparatus or an organic EL display apparatus.

## Claims

1. A laminate comprising, in sequence:
a substrate layer,
a first hardcoat layer, and
a second hardcoat layer,
the first hardcoat layer being in contact with the second hardcoat layer,
wherein at least one layer of the first hardcoat layer and the second hardcoat layer comprises a cured product of a curable composition containing a curable binder and an adhesion-imparting component, and
the adhesion-imparting component comprises at least one member selected from the group consisting of a mono(meth)acrylate having an oxygen-containing heterocyclic group, a mono(meth)acrylate having an aliphatic hydrocarbon group, a mono(meth)acrylate having a crosslinked cyclic hydrocarbon group, a mono(meth)acrylate having an allyloxy group, a polymer of a mono(meth)acrylate having an allyloxy group, a multibranched polyvinyl compound having a weight-average molecular weight of not less than 1000, a di (meth) acrylate having a crosslinked cyclic hydrocarbon group, an alkanediol di(meth)acrylate, and a polyalkylene glycol di(meth)acrylate.

2. The laminate according to claim 1, wherein the curable binder contains a polyfunctional (meth)acrylate and/or an epoxy compound.

3. The laminate according to claim 1 or 2, wherein the curable binder contains a di- to octa-functional (meth)acrylate and a polyfunctional alicyclic epoxy compound.

4. The laminate according to any one of claims 1 to 3, wherein the first hardcoat layer comprises a cured product of a first curable composition containing a polyfunctional (meth)acrylate and an epoxy compound,
the second hardcoat layer comprises a cured product of a second curable composition containing a polyfunctional (meth)acrylate, and
at least one of the first curable composition and the second curable composition contains an adhesion-imparting component.

5. The laminate according to any one of claims 1 to 4, wherein at least one layer of the first hardcoat layer and the second hardcoat layer contains an inorganic particle.

6. The laminate according to claim 5, wherein the inorganic particle contains a silica nanoparticle having a reactive group to a (meth) acryloyl group and/or an epoxy group.

7. The laminate according to any one of claims 1 to 6, wherein the adhesion-imparting component comprises at least one member selected from the group consisting of tetrahydrofurfuryl (meth)acrylate, a C₆₋₁₂alkyl mono(meth)acrylate, isobornyl (meth)acrylate, an C₁₋₃alkyl ester of an allyloxyC₁₋₃alkylacrylic acid, and a multibranched polyvinyl compound having a weight-average molecular weight of 10000 to 100000.

8. The laminate according to any one of claims 1 to 7, wherein a ratio of the adhesion-imparting component is 0.01 to 5 parts by weight relative to 100 parts by weight of the curable binder.

9. The laminate according to any one of claims 1 to 8, wherein the first hardcoat layer and the second hardcoat layer have a total thickness of not more than 60 µm.

10. The laminate according to any one of claims 1 to 9, which has a total light transmittance of not less than 70% and a haze of not more than 10%.

11. A shaped product comprising a laminate recited in any one of claims 1 to 10.

12. A process for producing a shaped product, the process comprising punching a laminate recited in any one of claims 1 to 10.
